Europäisches Patentamt

European Patent Office

Office européen des brevets

(11) Publication number: **0 049 121**
A2

(12) **EUROPEAN PATENT APPLICATION**

(21) Application number: **81304426.0**

(22) Date of filing: **25.09.81**

(51) Int. Cl.³: **B 60 P 1/64,** B 61 D 3/16

(30) Priority: **27.09.80 GB 8031295**

(43) Date of publication of application: **07.04.82**
**Bulletin 82/14**

(84) Designated Contracting States: **AT BE CH DE FR GB IT
LI NL SE**

(71) Applicant: **Phillips, John Wilfred, 7 St. Ronan's Avenue,
Duffield Derby (GB)**

(72) Inventor: **Phillips, John Wilfred, 7 St. Ronan's Avenue,
Duffield Derby (GB)**

(74) Representative: **Drever, Ronald Fergus et al, Swindell &
Pearson 44, Friar Gate, Derby DE1 1DA (GB)**

(54) **Improved mechanical handling apparatus.**

(57) Apparatus for transferring a container from a vehicle to a support or another vehicle or vice versa comprising telescopic laterally-extendable members (20, 21) having pivotable container-bearing beams (18) mounted thereon to support the container during transfer, and fluid powered rams (32) used with ground reaction members for tilting the container parallel to a longitudinal axis of the vehicle whilst the members (20, 21) and beams (18) are being engaged. The apparatus is vehicle mounted for self loading and unloading.

EP 0 049 121 A2

## Improved Mechanical Handling Apparatus

The invention relates to mechanical handling apparatus, particularly, but not exclusively, to apparatus which may be used to transfer containers and other unit loads from road vehicles to rail vehicles and vice versa.

Conventional container handling equipment is heavy and expensive and is restricted in use to purpose built depots having fixed structures of high capital cost. An object of the present invention is to provide container handling equipment which may be mounted on a conventional road vehicle to enable it to transfer a container or other load carrying body from itself to another vehicle or surface and vice versa.

It will be appreciated that the apparatus may be used to transfer an ISO container by its lower corner castings alone. Thus the forces due to handling are carried only by such part of the container as is constructed to support such forces. As the apparatus interfaces only with the lower corner castings it will handle flat containers and other specially constructed containers such as lightweight containers for road distribution systems.

According to the present invention there is provided apparatus on a vehicle for transferring a load carrying body between the vehicle and a support adjacent thereto, the apparatus comprising first load supporting means movable laterally of the vehicle, second load supporting means movably arranged on the first load supporting means and having means connectible with the body and arranged to be pivotal so as to enable the body to move between a substantially horizontal position on the second load supporting means, and another position wherein the body is tilted about an axis substantially parallel to a longitudinal axis of the vehicle, and means for moving the body between a substantially horizontal position on the support and said other position.

Preferably means is provided to stabilise and adjust the height of the vehicle in accordance with the height of the support. Such means may comprise vertically-orientated hydraulic ram devices attachable to the underside of the vehicle chassis and bearing upon the ground or upon the axle of the vehicle.

An embodiment of the invention will now be described, by way of example only, with reference to the accompanying diagrammatic drawings, in which :

Fig. 1 is a side view of a road vehicle on which the apparatus is mounted;

Fig. 2 is an end view of two vehicles showing the apparatus in operation, with parts removed for clarity;

Fig. 3 shows an arrangement for controlling actuation of part of the apparatus;

Fig. 4 shows an alternative arrangement;

Fig. 5 shows one arrangement of a lifting mechanism of the apparatus in a folded position;

Fig. 6 shows the lifting mechanism in an operating position;

Fig. 7 shows the main features of a lifting adaptor;

Fig. 8 shows an alternative lifting mechanism; and

Fig. 9 shows a container in a travelling position on the road vehicle.

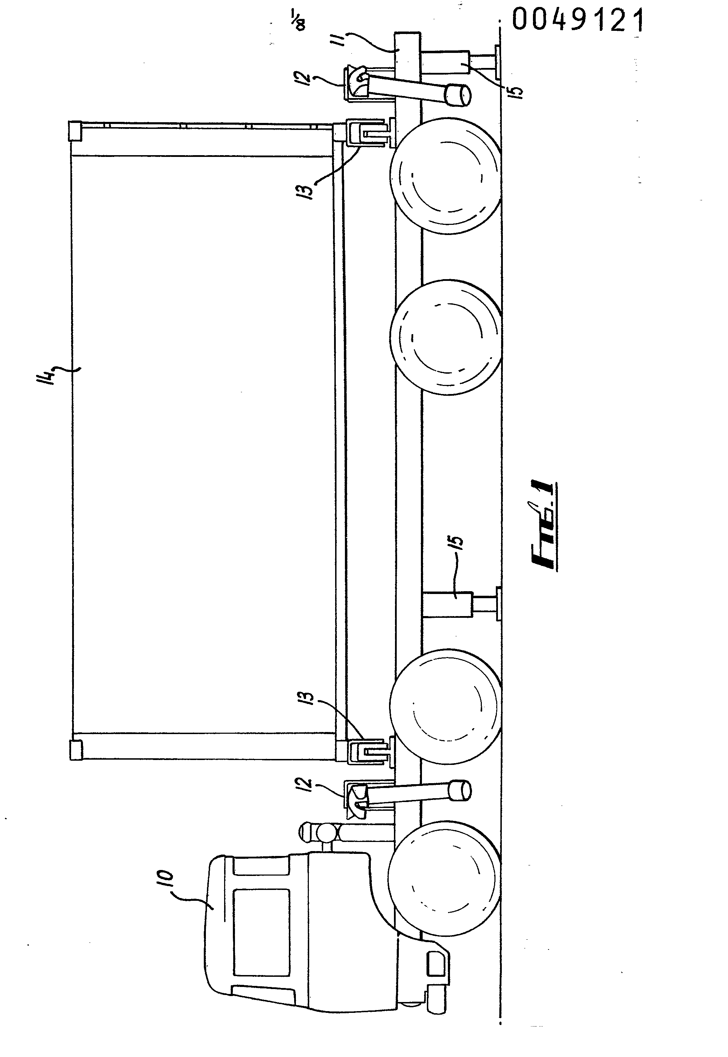

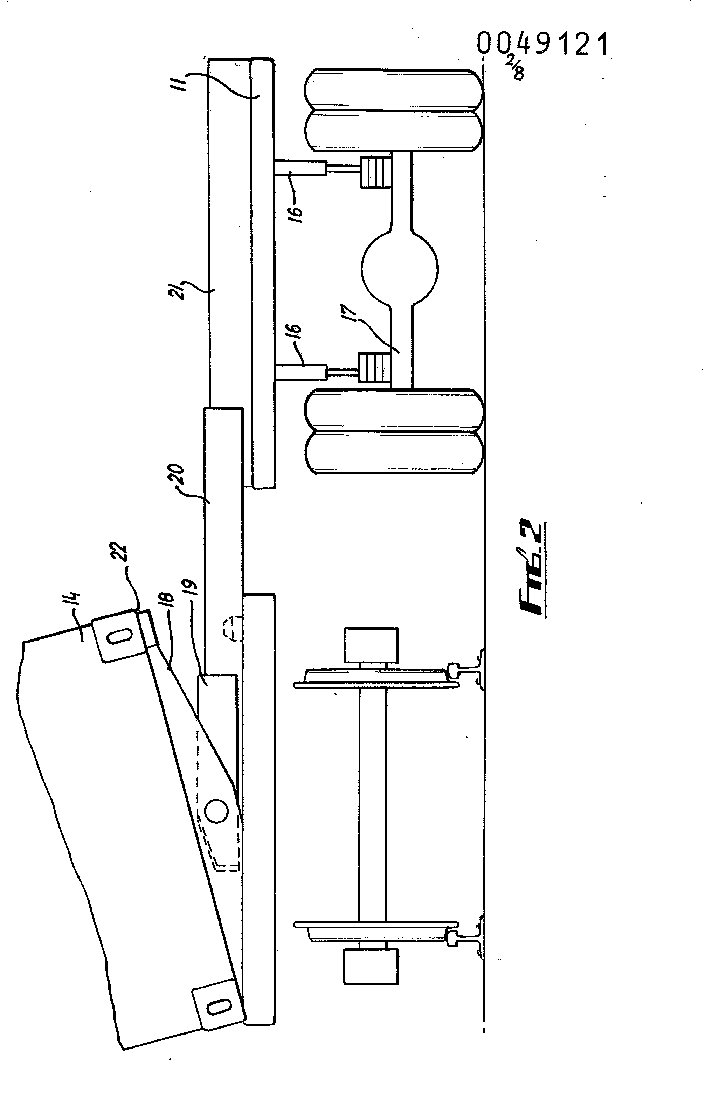

Referring to the drawings there is shown a road vehicle 10 having a main chassis 11 on which a lifting mechanism 12 and a lateral transfer mechanism 13 is mounted. .The load-carrying container 14 is detachably mounted on the two transfer mechanisms 13. Front and rear pairs of hydraulic rams 15 are mounted beneath the main chassis 11 for extension into engagement with the ground to adjust chasses height and to stabilise the vehicle during loading and unloading. Alternatively stabilising rams 16 (Fig. 2) may be mounted on the main chassis 11 in such a position as to engage with the road vehicle axle 17. Alternatively, vehicle height adjustment may be provided by changes in the suspension geometry or by the adjustment of tyre pressure.

Beneath the load-carrying container 14 the pair of lateral transfer mechanisms 13 are mounted on the chassis 11. As best seen in Fig. 2 each lateral transfer mechanism comprises a rocking beam 18 on which the container 14 is carried during transfer, a trolley 19 which supports the rocking beam 18 and which is slideably supported by a telescopic bridge 20 and 21. The movable bridge member 20 slides over the fixed bridge member 21 in such a way that the joint between them is capable of supporting a bending moment imposed by the container 14 during transfer. A latching mechanism 22 is provided to positively fix the container to the trolley when required.

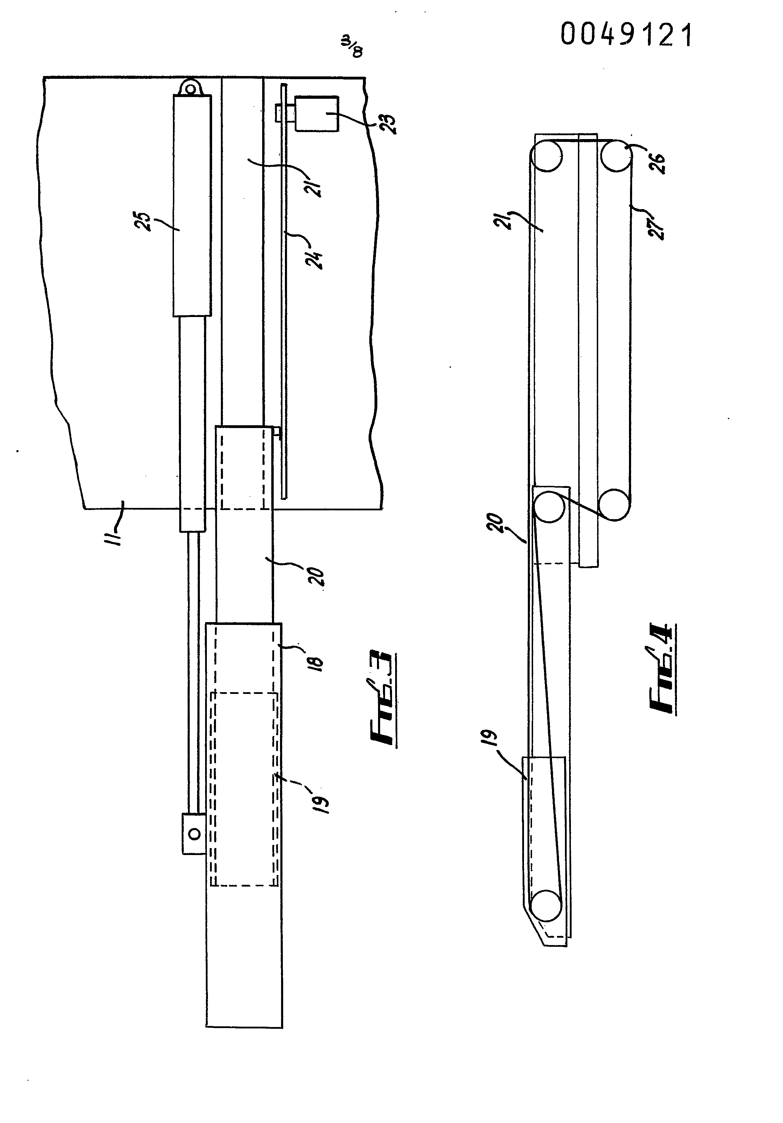

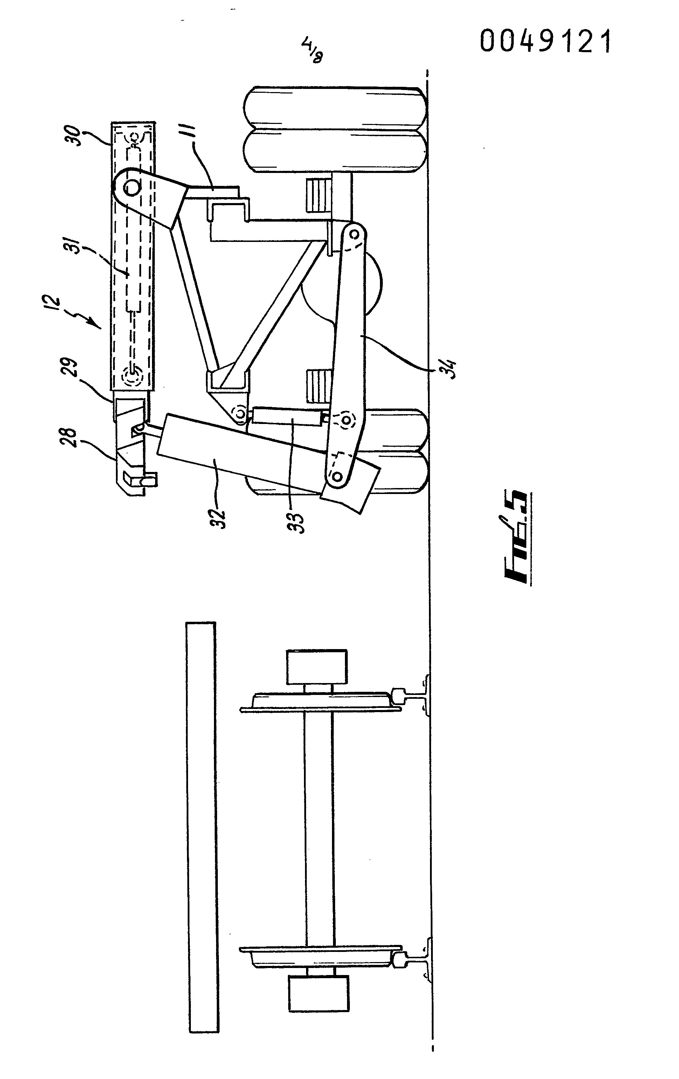

Referring to Figs. 3 and 4 the telescopic action of the bridge may be effected by an hydraulic motor 23 driving through a chain 24. The movement of the trolley 19 on the bridge 20 and 21 may be controlled by an hydraulic cylinder 25 or by an hydraulic motor 26 driving through a chain 27.

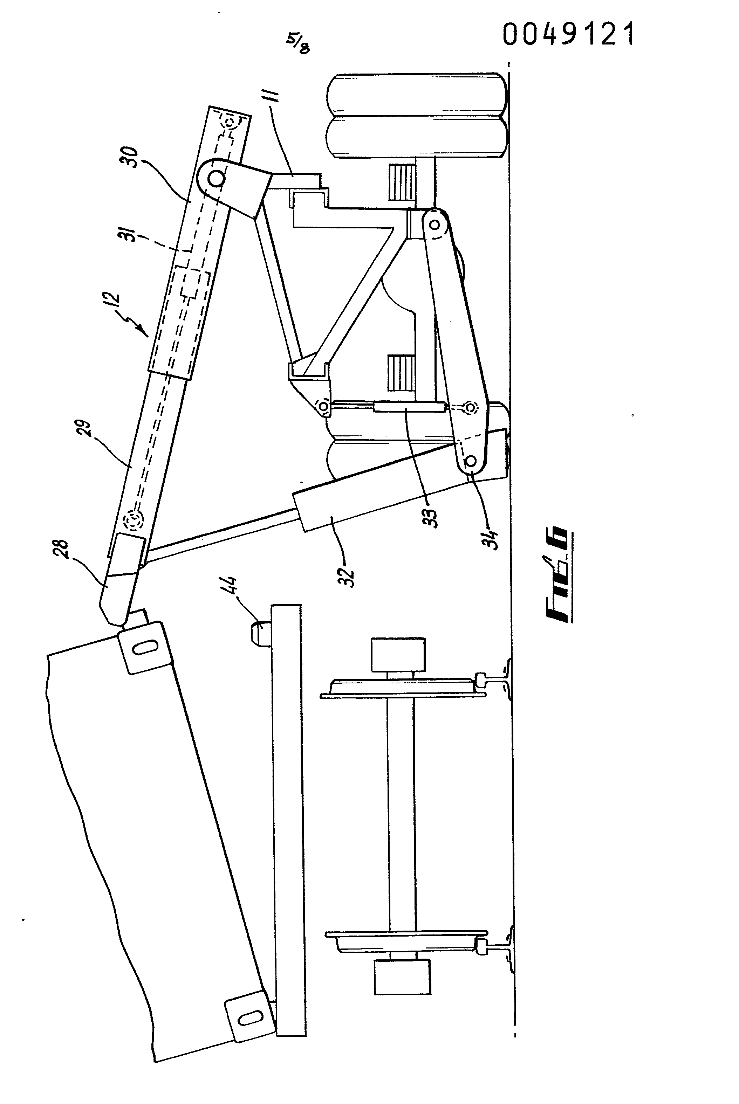

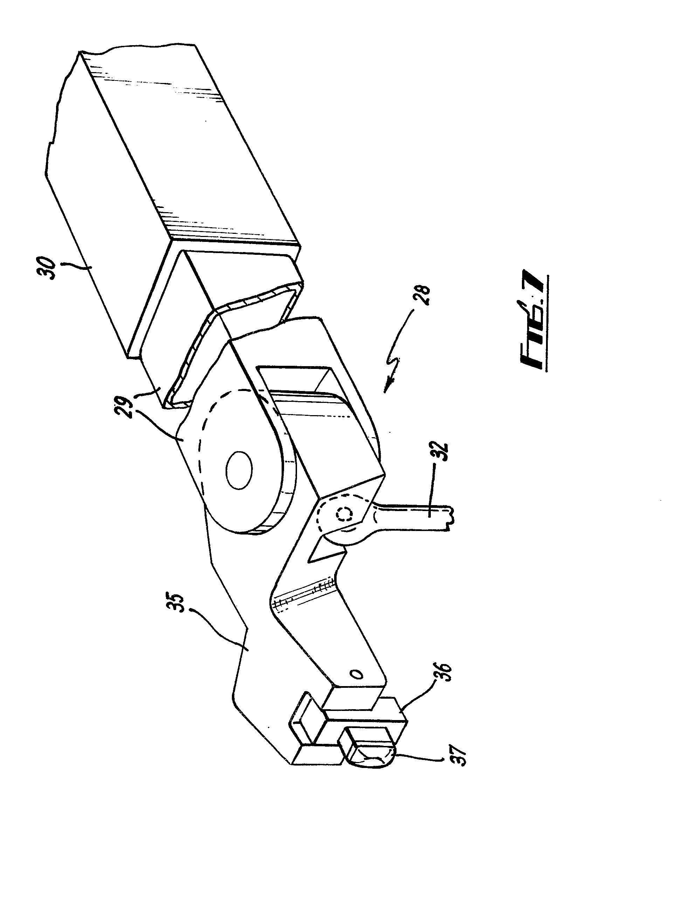

Referring to Figs. 5 and 6 the load carrying container is raised by the two lifting mechanisms 12 each of which comprises a lifting adaptor 28, a sliding beam 29, a tilting beam 30, a jack 31, a lifting jack 32, a stowage jack 33 and a link 34. In Figs. 5 and 6 the transfer mechanism has been omitted for clarity.

Referring to Fig. 6 the hydraulic pressure in jack 31 may be varied in order to change the line of action of the lift force applied to the container during the lifting process.

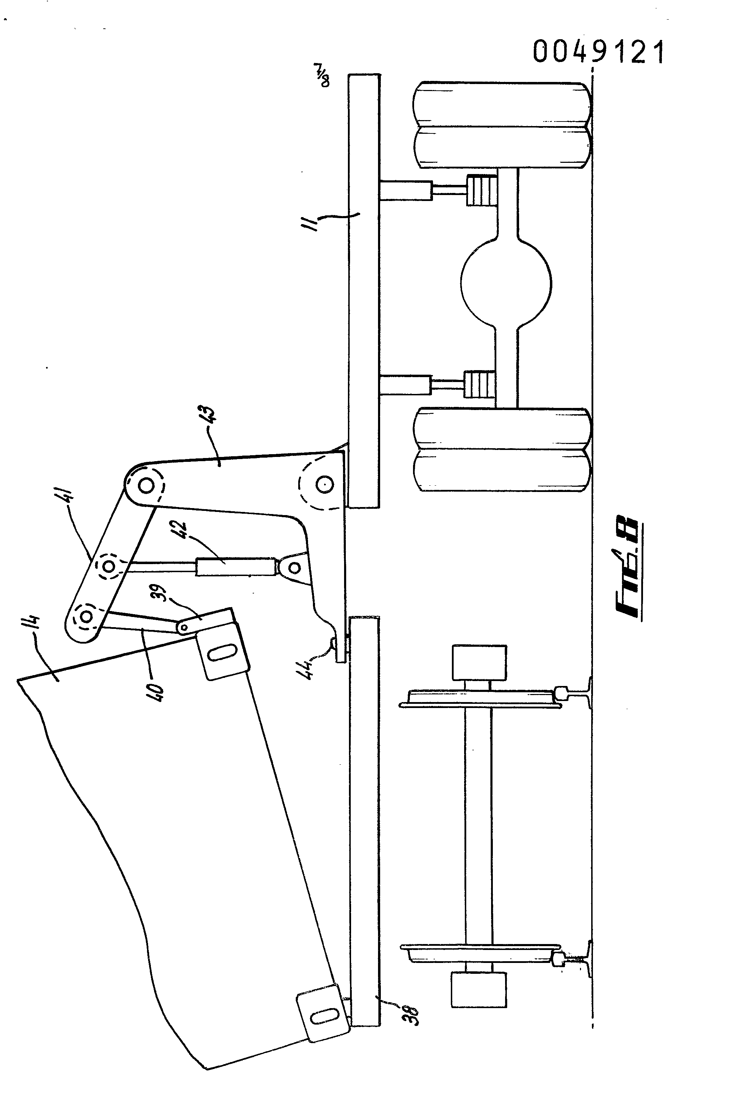

Referring to Fig. 7 the lifting adaptor 28 comprises a rotating support structure 35, a link 36 and a locking head 37. In order to fix the adaptor to the container the locking head 37 is introduced into the lifting point in the corner of the container and rotated through 90°. The means of moving the rotating support structure 35, the link 36 and the locking head 37 in relation to other parts of the mechanism may be by either manual or powered actuation and may be initiated either locally or remote from the lifting adaptor.

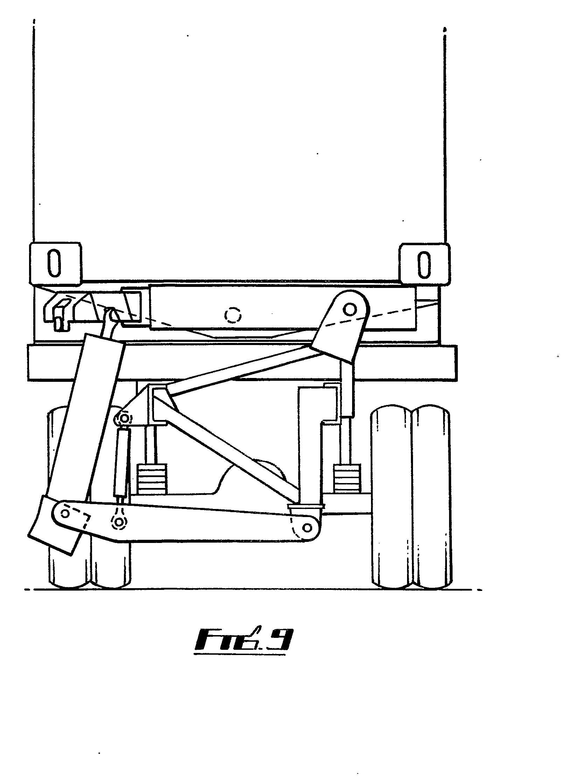

Referring to Fig. 8 an alternative lifting mechanism is possible where almost the entire weight of the container is supported by the rail vehicle chassis 38 during lifting. The alternative lifting mechanism is composed of a lifting adaptor 39, a link 40, a beam 41, a jack 42 and a foot member 43. In Fig. 8 the transfer mechanism has been omitted for clarity.

The standard container-carrying rail vehicle incorporates pegs 44, normally known as twistlocks, for location and retention of the container during rail transit.

In use of the apparatus, the vehicle draws alongside a railway vehicle from which the load-carrying container 14 is to be transferred. The stabilising rams 16 are then extended into contact with the ground or the axle 17 in order to lift the main chassis 11 of the vehicle to a position where the top surfaces of the rail vehicle chassis 38 and the road vehicle chassis 11 are approximately equal in height. The stabilising rams 16 may be adjusted during transfer if necessary in order to effect satisfactory operation of the apparatus. The stowage jack 33 is extended to allow the foot of the lifting jack 32 to come into contact with the ground. The two lifting adaptors 28 are then fixed to the load-carrying container 14, the position of the adaptor 28 being aided by the adjustment of the hydraulic cylinders 31 and 32. The container 14 is then lifted to the tilted position as shown in Fig. 6.

With the container 14 in the tilted condition each telescopic bridge 20 and 21 is moved into position on the rail vehicle and takes its location from the twistlock 44. The trolleys 19 and rocking beams 18 are then moved into position beneath the container, as shown in Fig. 2. The rocking beams 18 are then fixed to the container by the latching mechanisms 22. The container is then lowered to a horizontal position. The lifting mechanism is detached and the trolleys 19, rocking beams 18 and container 14 are moved across to their final position on the road vehicle. To complete the transfer operation the movable bridge members 20 are

0049121

retracted back onto the road vehicle. The stabilising jacks 16 are then raised from the ground or from the axles 17 and the road vehicle is then ready to move off with the container.

It will be appreciated that the apparatus may also be used to effect transfer in the opposite direction, that is to transfer a container from a railway or other vehicle onto a road vehicle fitted with equipment of the kind described. In such case the operation is carried out in the reverse manner.

Various modifications may be made without departing from the invention. For example, various ways may be found to affect the moving of the movable bridge member 20 and the trolley 19. Also, other lifting mechanisms are possible. Loads may be transferred from vehicles fitted with apparatus according to the invention to any suitable location such as another vehicle or an elevated platform and the invention is not restricted to the transfer of loads between road and rail vehicles.

It is to be understood that apparatus according to the invention may include means for lowering a container to the ground beside the vehicle, i.e., the support being the ground.

Claims

1.    Apparatus for transferring a load carrying body between
the vehicle and a support adjacent thereto, the apparatus being
characterised by first load supporting means (20, 21, 23, 24)
movable laterally of the vehicle, second load supporting means
(18, 19, and 25 or 26, 27) movably arranged on the first load
supporting means and having means (22) connectible with the
body and arranged to be pivotal so as to enable the body to move
between a substantially horizontal position on the second
load supporting means (18, 19) and another position wherein the
body is tilted about an axis substantially parallel to a
longitudinal axis of the vehicle, and means (28 - 32) for moving
the body between a substantially horizontal position on the
support and said other position.

2.    Apparatus according to claim 1, characterised by means (15
or 16, 17) to stabilise and adjust the height of the vehicle in
accordance with the height of the support.

3.    Apparatus according to claim 2, characterised in that said
means to stabilise and adjust the height of the vehicle is
provided by one or more hydraulic ram devices (15) attachable to
the underside of the vehicle chassis (11) and bearing upon the
ground.

4.    Apparatus according to claim 2, characterised in that said
means to stabilise and adjust the height of the vehicle is
provided by one or more hydraulic ram devices (16) attachable to
the underside of the vehicle chassis (11) and bearing upon an axle
(17) of the vehicle.

5. Apparatus according to any preceding claim, characterised in that said first load supporting means is provided by one or more telescopic members (20, 21) movable laterally of the vehicle from a retracted position in which the or each is disposed within the width of the vehicle to an extended position in which each extends alongside the vehicle chassis (11).

6. Apparatus according to claim 5, characterised in that the second load supporting means (18, 19) is provided by a beam element (18) pivotally mounted on the or each said telescopic member (19) and arranged to pivot about an axis substantially horizontal to the longitudinal axis of the vehicle, the beam element (18) being mounted on a portion of the telescopic member (19) which is remote from the vehicle chassis (11) in the telescopic extended position.

7. Apparatus according to any preceding claim, characterised in that the means (28 - 32) for moving the body between a substantially horizontal position on the support and said other position is provided by at least one fluid pressure powered piston and cylinder device (32) which when operable acts to lift an edge of said body relative to a ground reaction member of the device (32).

8. Apparatus as claimed in claim 7 characterised in that the means (28 - 32) for moving the body includes an elongate member (28 to 31) engageable with the said edge of the body, said elongate member (28 to 31) being lifted by the or each fluid pressure powered piston and cylinder (32).

FIG.1

0049121

FIG.2

0049121

Fig. 3

Fig. 4

4/8

Fig.5

FIG. 6

28 29 12 31 30

44

32 33 34 11

5/8

0049121

FIG. 7

FIG. 8

FIG. 9